# EUROPÄISCHE PATENTSCHRIFT

(11) **EP 2 052 808 B1**
(45) Veröffentlichungstag und Bekanntmachung des Hinweises auf die Patenterteilung: **10.03.2010**
(21) Anmeldenummer: 08405203.4
(22) Anmeldetag: 26.08.2008
(51) Int. Cl.: B23Q 3/18, B23Q 1/00, B23Q 3/06, B23Q 16/00, B23Q 16/02

(54) **Spanneinrichtung mit einem Spannfutter zum lösbaren Fixieren eines Werkstückträgers**
Tensioning device with a tensioning nut for reversibly fixing a workpiece carrier
Dispositif de serrage doté d'un mandrin destiné à la fixation amovible d'un support de pièces à usiner

(30) Priorität: 22.10.2007 CH 16422007
(43) Veröffentlichungstag der Anmeldung: 29.04.2009
(73) Patentinhaber: Erowa AG, 5734 Reinach (CH)
(72) Erfinder: Sandmeier, Bruno, 5703 Birrwil (CH)
(74) Vertreter: Rottmann, Maximilian

(56) Entgegenhaltungen:
- EP-A- 0 827 806
- EP-A- 1 679 151
- EP-A- 1 752 252
- US-A1- 2003 227 120
- US-A1- 2006 261 534

## Beschreibung

Die vorliegende Erfindung bezieht sich auf eine gemäss dem Oberbegriff des Anspruchs 1 ausgebildete Spanneinrichtung.

Derartige Spanneinrichtungen werden bevorzugt zum positionsdefinierten Aufspannen von mit einem Werkzeug oder Werkstück versehenen Werkstückträgern eingesetzt. Das Spannfutter wird üblicherweise fest auf einem Arbeitstisch einer Bearbeitungsmaschine oder einer Presse fixiert, während der Werkstückträger wiederholt positionsgenau am Spannfutter fixierbar und auch wieder lösbar ist.

Insbesondere bei halb- oder vollautomatisch ablaufenden Arbeitsprozessen ist es wichtig, dass der das zu bearbeitende Werkstück tragende Werkstückträger korrekt am Spannfutter festgespannt und verriegelt ist bzw. vollständig gelöst und damit entriegelt ist. Ist der Werkstückträger beispielsweise nicht korrekt am Spannfutter fixiert, so besteht die Gefahr, dass sich dieser bei der mechanischen Bearbeitung des daran festgespannten Werkstücks, beispielsweise während eines Fräsvorgangs, löst, was zu erheblichen Folgeschäden führen kann. Soll der Werkstückträger nach dem Bearbeitungsvorgang von dem Spannfutter abgehoben werden, so muss wiederum sichergestellt sein, dass der Verriegelungsmechanismus vollständig entriegelt, also komplett gelöst ist, so dass der Werkstückträger ohne Folgeschäden vom Spannfutter abgehoben werden kann. Dies ist insbesondere bei schweren Werkstückträgern wichtig, da diese nicht mehr manuell abgehoben werden können, sondern beispielsweise mittels eines Roboters oder eines Krans. Es versteht sich, dass das Abheben eines Werkstückträgers bei nicht vollständig entriegelten Spannelementen ebenfalls zu Folgeschäden mit erheblicher Kostenfolge führen kann. Eine Problematik bei der Erkennung, ob der Verriegelungsmechanismus vollständig verriegelt bzw. entriegelt ist besteht darin, dass über ein zentrales Bauteil oder einen zentralen Sensor nicht erkannt werden kann, ob die Spannelemente auch wirklich verriegelt bzw. entriegelt sind. Zudem wird zumeist über Hilfsgrössen wie beispielsweise über den zum Verriegeln bzw. Entriegeln aufgebrachten pneumatischen Druck zu erkennen versucht, ob der Verriegelungsmechanismus korrekt arbeitet. Dies ist jedoch sehr problematisch, da auf diese Weise nicht immer erkennbar ist, ob sich die Spannelemente in der ausgerückten Verriegelungs- oder der zurückgezogenen Entriegelungsstellung befinden. Sind die Spannelemente verklemmt und daher nicht vollkommen entriegelt bzw. verriegelt, so ist es sehr schwierig wenn nicht gar unmöglich, dies über das Messen einer Hilfsgrösse zu erkennen.

Aus der DE-A-196 36 375 ist ein Schnellverschluss für eine Palette bekannt. Das der Aufnahme eines an der Palette angeordneten Spannzapfens "Einzugsnippel" dienende Spannfutter ist mit einer durchgehenden Ausnehmung versehen. Der Spannzapfen ist mit messerartigen Auflageflächen versehen, welche anfallende Späne und dergleichen durchtrennen sollen. Der Verriegelungsmechanismus des Spannfutters ist mit einer Vielzahl von Verriegelungskolben versehen, die dem Fixieren des Spannzapfens dienen. An seinem inneren, radialen Ende trägt der jeweilige Verriegelungskolben einen Anschlag, welcher in verriegeltem Zustand auf einem Absatz des Spannzapfens aufsitzt und den Spannzapfens kraftschlüssig in der Ausnehmung des Spannfutters hält. Der genannte Anschlag ist gleichzeitig als Messer ausgebildet, mittels welchem eindringende Späne ebenfalls durchtrennt werden können. Die Verriegelungskolben weisen axiale Durchgangsbohrungen auf, wobei dem Dokument keinerlei Angaben über Sinn und Zweck dieser Bohrungen entnommen werden können. Das Spannfutter ist mit mehreren Ausblasöffnungen zum Ausblasen von Reinigungsluft versehen.

Die DD-A-267 933 offenbart ein Spannfutter mit einer Einrichtung zur Werkstücklagekontrolle. Das in der Form eines Schraubstocks ausgebildete Spannfutter ist mit zwei Spannbacken versehen, die mit je einer Durchgangsbohrung versehen sind. Beide Durchgangsbohrungen sind über flexible Leitungen mit einem stationären Unterteil des Spannfutters verbunden. In diesen Unterteil ist eine zentrale Durchgangsbohrung eingelassen, welche über eine horizontal verlaufendene Bohrung mit den beiden flexiblen Leitungen verbunden ist. Die horizontal verlaufende Bohrung ist mit zwei Drosselventilen versehen. Zum Überwachen des in den Leitungen bzw. Bohrungen vorherrschenden Drucks sind Druckmesseinrichtungen vorgesehen. Beim Festspannen eines Werkstücks wird durch eine Plananlage des Werkstücks innerhalb der Spannbacken ein Druckanstieg in dem der betreffenden Spannbacke zugeordneten Leitungszweig hervorgerufen, was mittels der zugeordneten Druckmesseinrichtung erkannt werden kann.

Schliesslich ist in der US 2006/0261534 A1 eine Spannvorrichtung bestehend aus einem mit einer zentralen Öffnung versehenen Futter und einem darin festspannbaren Spannzapfen offenbart. In der Öffnung des Futters ist ein erstes äusseres Verriegelungselement angeordnet. Innerhalb dieses ersten äusseren Verriegelungselements ist ein zweites inneres Verriegelungselement angeordnet, welches radial aufweitbar bzw. zusammenziehbar ist, um den Spannzapfen festzuspannen. Auf der Oberseite ist das Futter mit drei als Z-Anschlag für eine festzuspannenden Palette dienenden Auflageflächen versehen. Eine dieser drei Auflageflächen ist mit einer Erkennungs-Öffnung versehen, welche mit einer Druckluftquelle verbunden ist. Sobald eine Palette an dem Futter festgespannt wird, verschliesst diese die Erkennungs-Öffnung, was zu einem Druckanstieg führt. Über das Erfassen des pneumatischen Drucks beim Verschliessen der Erkennungs-Öffnung kann somit erkannt werden, ob eine Pallette an dem Futter aufliegt oder nicht.

Die Erfindung zielt darauf ab, eine Spanneinrichtung mit einem mit einem Verriegelungsmechanismus versehenen Spannfutter zum lösbaren Fixieren eines

Werkstückträgers derart weiterzubilden, dass am Spannfutter selber keine Sensoren zur Überwachung einer korrekten Funktionsweise des Verriegelungsmechanismus angeordnet werden müssen, wobei trotzdem zuverlässig und auf einfache Weise erkennbar sein soll, ob die Spannelemente des Verriegelungsmechanismus korrekt verriegelt und/oder entriegelt sind.

Hierzu wird nach der Erfindung eine Spanneinrichtung gemäss dem Anspruch 1 bereitgestellt.

Indem zumindest ein Spannelement mit einer Durchgangsbohrung versehen ist, welche bei korrekter Verriegelung und/oder Entriegelung des Spannelements einseitig verschlossen ist, und/oder zumindest einem Spannelement ein mit einer Durchgangsbohrung versehenes Betätigungselement zugeordnet ist, dessen Durchgangsbohrung bei korrekter Verriegelung und/oder Entriegelung des zugehörigen Spannelements einseitig verschlossen ist, wobei die Durchgangsbohrungen der Spannelemente bzw. der Betätigungselemente über eine Verbindungsleitung mit einer pneumatischen Quelle verbunden sind und zumindest ein Sensor zum Erfassen der Luftströmung in der Verbindungsleitung vorgesehen ist, kann auf einfache Weise erkannt werden, ob die Spannelemente korrekt verriegelt oder entriegelt sind. Sobald nämlich die Luftströmung in der Verbindungsleitung ein vorbestimmtes Mass überschreitet, ist davon auszugehen, dass eine oder ggf. mehrere Durchgangsbohrung(en) nicht korrekt verschlossen ist/sind, was darauf hinweist, dass die Spannelemente nicht korrekt verriegelt oder entriegelt sind. Damit wird die grundsätzliche Voraussetzung geschaffen, um auf einfache Weise zu erkennen, ob die Spannelemente korrekt verriegelt und/oder entriegelt sind. Befinden sich nämlich die Spannelemente nicht in der Verriegelungs- oder Entriegelungsstellung, so ist die entsprechende Durchgangsbohrung nicht verschlossen, was mittels des Durchflusssensors erkennbar ist, da in diesem Fall eine nennenswerte Luftströmung in der Verbindungsleitung vorhanden ist.

Bevorzugte Ausführungsformen und Weiterbildungen des Erfindungsgegenstandes sind in den abhängigen Ansprüchen 2 bis 12 umschrieben.

Im Folgenden wird ein bevorzugtes Ausführungsbeispiel der erfindungsgemässen Spanneinrichtung unter Bezugnahme auf die beiliegenden Zeichnungen näher erläutert. In den Zeichnungen zeigt:
- Fig. 1: eine perspektivische Ansicht eines Verriegelungsmechanismus für ein Spannfutter;
- Fig. 1a: ein Spannelement in vergrösserter Darstellung;
- Fig. 2: einen Längsschnitt durch den Verriegelungsmechanismus gemäss Fig. 1 zusammen mit einem Spannzapfen;
- Fig.3: einen Längsschnitt durch das gesamte Spannfutter mit aktiviertem Verriegelungsmechanismus;
- Fig.4: einen Längsschnitt durch das Spannfutter gemäss Fig. 3 mit nicht aktiviertem Verriegelungsmechanismus;
- Fig. 5: einen Längsschnitt durch den Spannzapfen sowie zwei Spannelemente im verriegelten Zustand zusammen mit weiteren Elementen der Spanneinrichtung;
- Fig. 6: einen Längsschnitt durch den Spannzapfen sowie zwei Spannelemente im gelösten Zustand zusammen mit weiteren Elementen der Spanneinrichtung;
- Fig. 7: einen Schnitt durch einen Teil des verriegelten Spannfutters zusammen mit weiteren Elementen der Spanneinrichtung, und
- Fig. 8: einen Schnitt durch einen Teil des vollständig entriegelten Spannfutters zusammen mit weiteren Elementen der Spanneinrichtung.

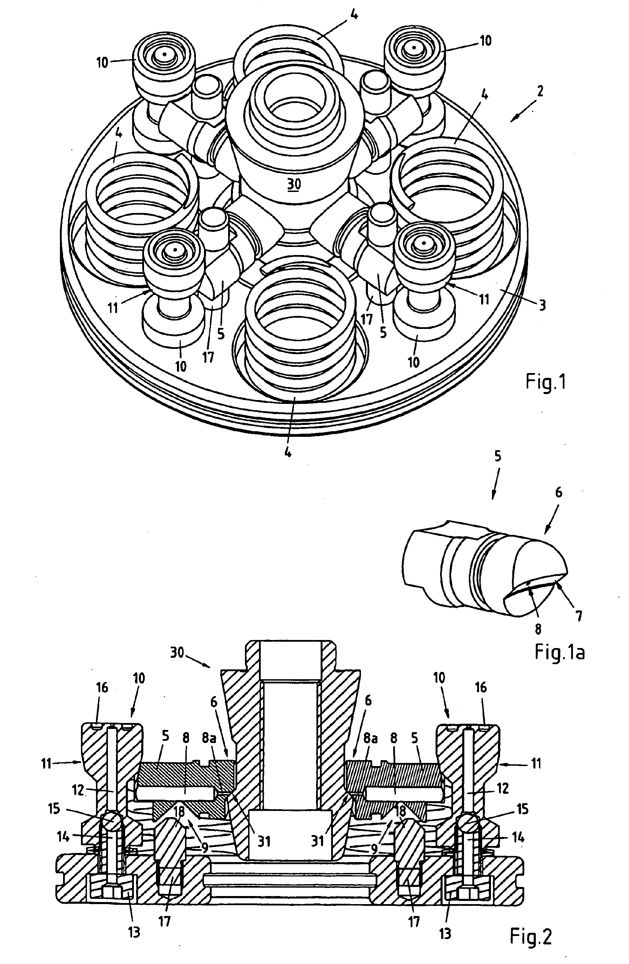

In der Fig. 1 sind die wesentlichen Teile eines Verriegelungsmechanismus 2 für ein Spannfutter zusammen mit einem Spannzapfen 30 in einer perspektivischen Ansicht dargestellt. Der Verriegelungsmechanismus 2 besteht im wesentlichen aus einem ringförmigen Betätigungskolben 3, vier Druckfedern 4, vier Spannelementen 5 sowie Betätigungselementen in der Form von vier Verriegelungsbolzen 10 und vier Öffnungsbolzen 17. Der Kolben 3 wird mittels den Druckfedern 4 an einem Gehäuseoberteil (nicht dargestellt) des Spannfutters abgestützt, wobei die Druckfedern 4 im zusammengebauten Zustand des Spannfutters bestrebt sind, den Kolben 3 in seine untere Endstellung zu drücken, in der sich der Verriegelungsmechanismus im verriegelten Zustand befindet. Sowohl die Verriegelungsbolzen 10 wie auch die Öffnungsbolzen 17 sind fest mit dem Kolben 3 verbunden. Die schieberförmig ausgebildeten Spannelemente 5 dienen dazu, den Spannzapfen 30 im Spannfutter zu fixieren, wobei sie den Spannzapfen 30 gleichzeitig in axialer d.h. in Z-Richtung belasten, um ihn zusammen mit dem Werkstückträger, an dem der Spannzapfen 30 üblicherweise befestigt ist, gegen das Spannfutter zu ziehen. Die Verriegelungsbolzen 10 sind mit einer schrägen Druckfläche 11 versehen, welche das jeweilige Spannelement 5 beim Herunterfahren des Kolbens 3 radial nach innen in seine Verriegelungsstellung drücken. Da die Federn 4 bestrebt sind, den Kolben 3 in seiner unteren Endstellung zu halten, werden die Spannelemente 5 durch die Verriegelungsbolzen 10 solange in ihrer Verriegelungsstellung arretiert, bis der Kolben 3 pneumatisch nach oben in seine Entriegelungsstellung gefahren wird. Beim Hochfahren des Kolbens 3 werden die Spannelemente 5 durch die Öffnungsbolzen 17 radial nach aussen geschoben, wie nachfolgend noch näher beschrieben wird. Anstelle von vier Verriegelungsbolzen 10 sind natürlich auch Varianten mit mehr oder weniger als vier Verriegelungsbolzen denkbar, wobei zumindest zwei Verriegelungsbolzen vorgesehen werden müssen.

Der dem Spannzapfen 30 zugewandte Kopfteil des jeweiligen Spannelements 5 ist mit einer an die Aussenkontur des Spannzapfens 30 angepassten Stirnseite versehen, welche sich in der Verriegelungsstellung des jeweiligen Spannelements 5 flächig an dem Spannzapfen 30 anlegt. Die Fig. 1a zeigt ein Spannelement 5 in einer vergrösserten, perspektivischen Ansicht von vorne. Der Kopfteil des Spannelements 5 ist mit einer gewölbten Druckfläche 7 versehen, aus der zentral eine Bohrung 8 mündet. Die genannte Druckfläche 7 ist an die Kontur des Spannzapfens angepasst, so dass das Spannelement 5 mit seiner gewölbten Druckfläche 7 flächig am jeweiligen Spannzapfen zur Anlage kommt.

Die Fig. 2 zeigt einen Längsschnitt durch den Verriegelungsmechanismus 2 gemäss Fig. 1 zusammen mit einem Spannzapfen 30. Aus dieser Darstellung, welche den Kolben 3 in seiner unteren Endstellung, also der Verriegelungsstellung, zeigt ist ersichtlich, dass der jeweilige Verriegelungsbolzen 10 mit seiner Druckfläche 11 das jeweilige Spannelement 5 radial nach innen in seine Verriegelungsstellung drücken. In dieser Verriegelungsstellung liegt das jeweilige Spannelement 5 mit seiner Stirnseite flächig an einer ringförmig umlaufenden, durch eine Schulter 31 gebildeten Spannfläche des Spannzapfens 30 an. Im weiteren ist ersichtlich, dass das jeweilige Spannelement 5 mit einer Durchgangsbohrung 8 versehen ist, welche von der Rückseite in Längsrichtung durch das ganze Spannelement 5 hindurch führt und auf der Vorderseite in Form einer Bohrung 8a mit geringerem Durchmesser aus dem Kopfteil 6 mündet. Wenn sich das jeweilige Spannelement 5 in der Verriegelungsstellung flächig an der Schulter 31 des Spannzapfens 30 anlegt, wird die Durchgangsbohrung 8 auf der Vorderseite durch den Spannzapfen 30 verschlossen. Im weiteren ist erkennbar, dass das jeweilige Spannelement 5 auf seiner Unterseite mit einer konischen Ausnehmung 9 versehen ist, in welche der jeweilige Öffnungsbolzen 17 beim Hochfahren derart mit seiner konisch zulaufenden Vorderseite 18 eingreift, dass das zugehörige Spannelement 5 radial nach aussen geschoben und die Verriegelung gelöst wird. Schliesslich ist erkennbar, dass der jeweilige Verriegelungsbolzen 10 mittels einer Schraube 13 an dem Kolben 3 befestigt ist. Sowohl der Verriegelungsbolzen 10 wie auch die Schraube sind mit einer Durchgangsbohrung 12, 14 versehen. Zwischen der Durchgangsbohrung 14 der Schraube 13 und derjenigen des Verriegelungsbolzens 10 ist eine als Rückschlagventil wirkende Kugel 15 angeordnet, deren Funktion anschliessend noch näher erläutert wird.

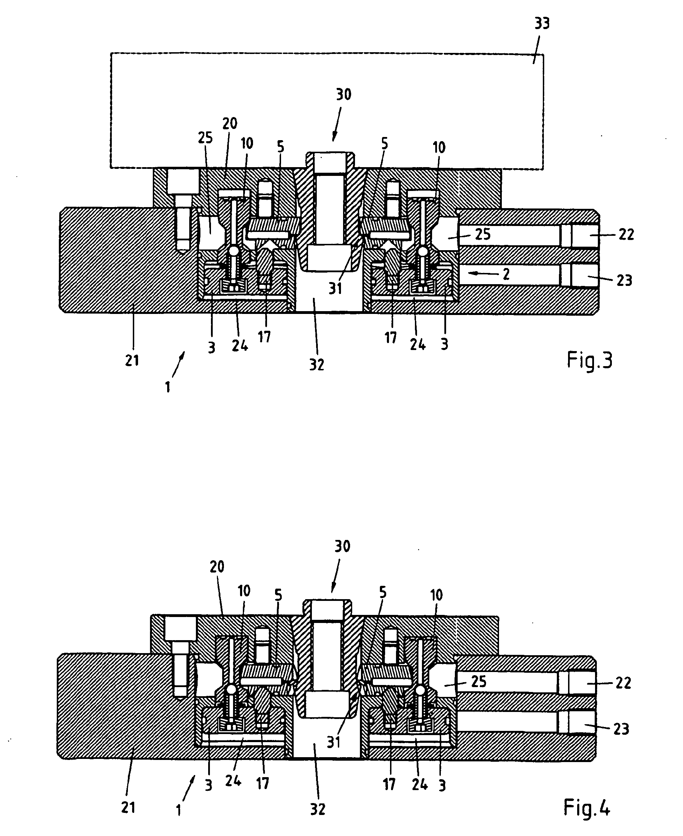

Die Figur 3 zeigt einen Querschnitt durch das Spannfutter 1, welches mit einem gemäss der Fig. 2 ausgebildeten Verriegelungsmechanismus 2 versehen ist. Zudem ist schematisch ein Werkstückträger 33 angedeutet, an dem der Spannzapfen 30 befestigt ist. Der Ausdruck Werkstückträger steht stellvertretend für ein an dem Spannfutter 1 festspannbares Spannteil, an dem nicht nur Werkstücke sondern ggf. auch Werkzeuge oder andere Elemente fixierbar sind. Der Verriegelungsmechanismus 2 ist im verriegelten Zustand dargestellt. Wie ersichtlich, weist das Spannfutter 1 einen Gehäuseoberteil 20 und einen Gehäuseunterteil 21 auf, zwischen denen der Veniegelungsmechanismus 2 angeordnet ist. Aus dieser Darstellung sind im weiteren radial in den Gehäuseunterteil 21 des Spannfutters führende Kanäle 22, 23 ersichtlich, welche der Zufuhr von Druckluft dienen. Das Spannfutter 1 ist mit einer zentralen Öffnung 32 zur Aufnahme des Spannzapfens 30 versehen, wobei die Spannelemente 5 quer zur Längsachse dieser Öffnung 32 verschiebbar sind. Der Werkstückträger 33 ist mit nicht näher dargestellten Zentrierelementen versehen, welche derart mit am Spannfutter 1 angeordneten weiteren Zentrierelementen zusammenwirken, dass der Werkstückträger 33 beim Festspannen am Spannfutter 1 in X- und Y-Richtung positioniert wird.

Der obere Kanal 22 mündet in eine ringförmig ausgebildete Druckkammer 25, welche nach aussen abgedichtet ist. Sämtliche Spannelemente 5 ragen mit ihrer Rückseite in diese Druckkammer 25, so dass die durch das jeweilige Spannelement 5 führende Durchgangsbohrung 8 mit der Druckkammer 25 in Verbindung steht. Dadurch sind die Durchgangsbohrungen 8 sämtlicher Spannelemente 5 in pneumatischer Hinsicht parallel geschaltet und mit dem oberen Kanal 22 verbunden. Um den Veniegelungszustand der Spannelemente 5 zu überprüfen und die Spannelemente 5 ggf. zusätzlich radial nach innen gegen den Spannzapfen zu drücken, wird über den oberen Kanal 22 Druckluft zugeführt. Diese Druckluft strömt von dem Kanal 22 in die Druckkammer 25 sowie die in die durch das jeweilige Spannelement 5 führenden Bohrungen 8 ein. Sofern alle Spannelemente 5 am Spannzapfen anliegen, stellt sich nach kurzer Zeit eine Luftströmung nahe Null ein, was mit einem entsprechenden Sensor erfasst werden kann, wie anschliessend noch näher erläutert wird.

Der untere Kanal 23 steht mit einem unterhalb des Kolbens 3 angeordneten, ringförmig ausgebildeten Druckraum 24 in Verbindung, wobei die von dem Kanal 23 in den Druckraum 24 führenden Kanäle aus dieser Darstellung nicht ersichtlich sind. Die über den unteren Kanal 23 zugeführte Druckluft dient dem Hochschieben des Kolbens 3.

Somit wird über den unteren Kanal 23 die zum Öffnen des Verriegelungsmechanismus 2 benötigte Luft zugeführt, während über den oberen Kanal 22 Luft die zum Nachspannen des Verriegelungsmechanismus 2 dienende Luft eingeleitet wird. In beiden Fällen dient die zugeführte Luft jedoch auch dem Überprüfen des Zustands des Spannfutters 1, namentlich ob die Spannelemente 5 des Verriegelungsmechanismus 2 korrekt verriegelt bzw. entriegelt sind, wie nachfolgend noch detailliert erläutert wird. Über den unteren Kanal kann zusätzlich auch Luft zum Reinigen von Auflageflächen zugeführt werden.

Die Figur 4 zeigt einen Querschnitt durch das Spannfutter 1 gemäss Fig. 3, wobei sich die Spannelemente 5 des Verriegelungsmechanismus 2 in der entriegelten Stellung befinden. Um die Spannelemente 5 zu entriegeln, wird über den unteren Kanal 23 Druckluft zugeführt. Diese Druckluft gelangt in einen unterhalb des Ringkolbens 3 angeordneten Ringraum 24 und drückt den Kolben 3 entgegen der Kraft der Druckfedern nach oben. Dabei bewegen sich auch die Verriegelungsbolzen 10 sowie die Öffnungsbolzen 17 nach oben. Bei der nach oben gerichteten Bewegung der Verriegelungsbolzen 10 entfernt sich deren schräge Druckfläche von der Rückseite des jeweiligen Spannelements 5, so dass dieses durch den jeweiligen Öffnungsbolzen 17 radial nach aussen geschoben werden kann. In der entriegelten Stellung des Verriegelungsmechanismus 2 kann der Spannzapfen 30 in die zentrale Öffnung 32 des Spannfutters 1 eingeführt bzw. daraus entnommen werden.

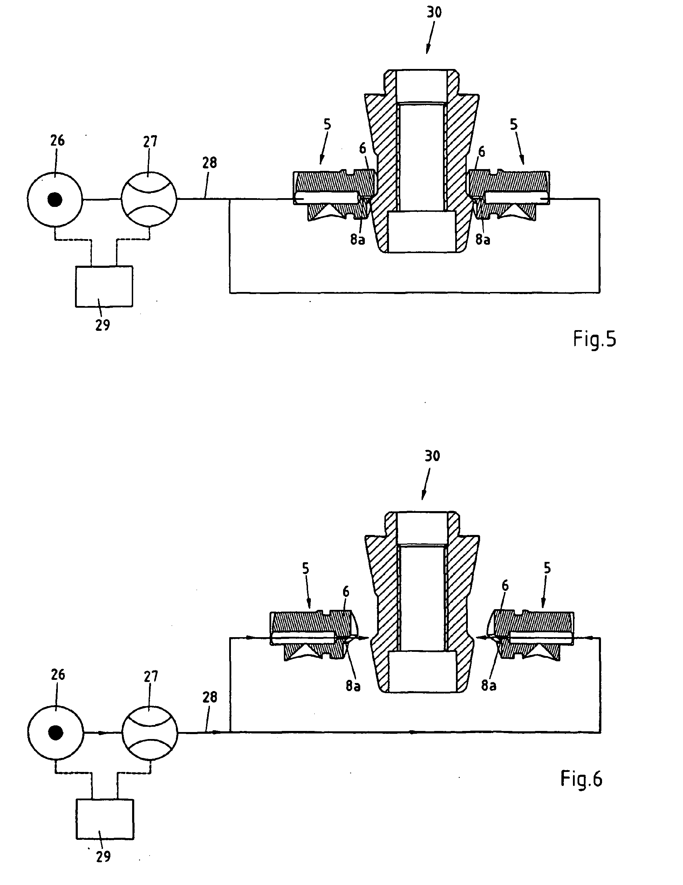

Anhand der Figuren 5 und 6, welche einen Längsschnitt durch zwei Spannelemente 5 zusammen mit einem Spannzapfen 30 sowie weiteren, schematisch dargestellten Elementen zeigen, soll erläutert werden, wie ein korrektes Verriegeln der Spannelemente 5 überprüft werden kann. Neben dem eigentlichen Spannfutter umfasst die Spanneinrichtung eine Druckluftquelle 26, einen Sensor 27 zum Erfassen einer Luftströmung, eine Verbindungsleitung 28 sowie eine elektronische Steuer- und Auswertevorrichtung 29. In dem in Fig. 5 gezeigten Verriegelungszustand liegen die Spannelemente 5 mit ihrem Kopfteil 6 flächig an der Schulter des Spannzapfens 30 an. Wie bereits vorgängig erwähnt, werden die Spannelemente 5 durch die Verriegelungsbolzen (nicht dargestellt) radial nach innen in ihre Verriegelungsstellung gedrückt. Wird nun von der Druckluftquelle 26 Druckluft zugeführt, so strömt diese über die Verbindungsleitung 28 zu den Spannelementen 5 bzw. deren jeweiliger Längsbohrung 8, 8a. Da die Spannelemente 5 mit ihrem Kopfteil 6 flächig an der Schulter des Spannzapfens 30 anliegen, ist die jeweilige Längsbohrung 8a endseitig verschlossen. Nachdem die mit Druckluft beaufschlagten Hohlräume des Spannfutters, namentlich die Druckkammer 25 (Fig. 3), mit Druckluft beaufschlagt ist/sind, stellt sich in der Verbindungsleitung 28 eine Luftströmung nahe Null ein, da die Druckluft nicht über die aus der Druckkammer 25 nach aussen führenden Längsbohrungen 8, 8a entweichen kann. Sofern allerdings eines oder mehrere der Spannelemente 5 nicht dicht an dem Spannzapfen 30 anliegen, so kann die Druckluft über die jeweilige Längsbohrung 8 in die zentrale Öffnung 32 entweichen. Sollte also zumindest eine der durch die Spannelemente führenden Längsbohrungen 8, 8a nicht durch den Spannzapfen verschlossen sind, kann die durch die Verbindungsleitung 28 strömende Luft mittels des Sensors 27 erfasst und über die elektronische Steuer- und Auswertevorrichtung 29 entsprechend erkannt und ausgewertet werden kann. Da sämtliche Spannelemente 5 in pneumatischer Hinsicht parallel miteinander verbunden sind, kann jedenfalls erkannt werden, ob sämtliche Spannelemente 5 korrekt verriegelt sind bzw. ob zumindest eines der Spannelemente 5 nicht korrekt verriegelt ist. Zu erwähnen ist, dass das jeweilige, zwischen der Durchgangsbohrung 14 der Schraube 13 und der Durchgangsbohrung 12 des Verriegelungsbolzens 10 angeordnete Rückschlagventil 15 verhindert, dass über die genannten Durchgangsbohrungen 12, 14 ggf. Luft aus der Druckkammer entweichen kann (Fig. 2).

Die Fig. 6 zeigt die Spannelemente 5 im entriegelten Zustand. Anhand dieser Darstellung ist erkennbar, dass die Druckluft über den Kopfteil 6 bzw. die aus dem Kopfteil 6 mündende Bohrung 8a der nicht an dem Spannzapfen 30 anliegenden Spannelemente 5 entweichen kann, wie dies durch Pfeile angedeutet ist. Das Entweichen der Luft über eines oder mehrere Spannelemente 5 ist mittels des Sensors 27 leicht erkennbar.

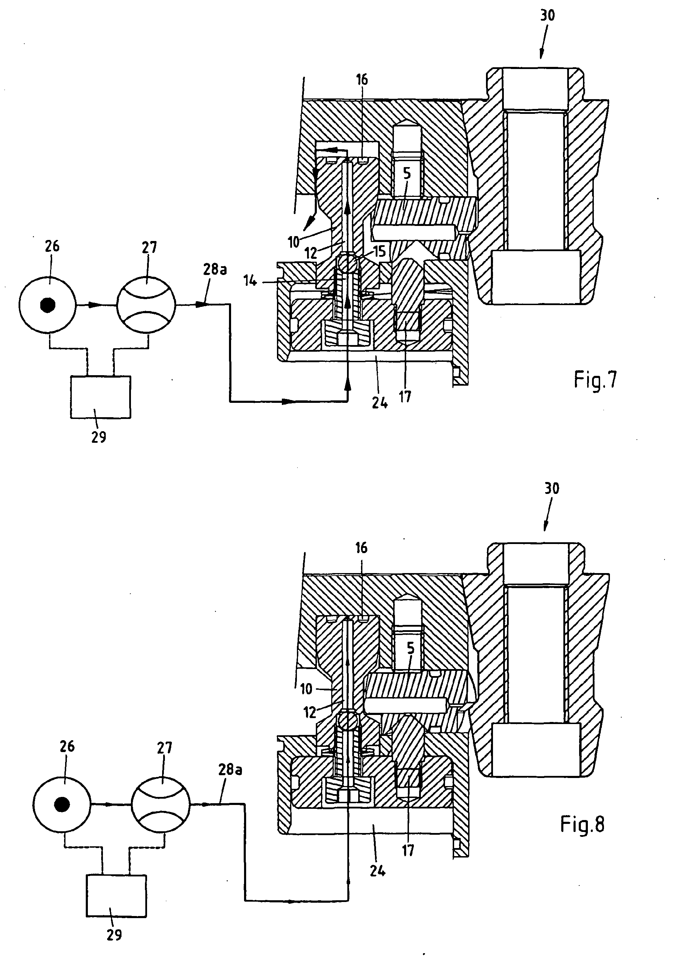

Die Fig. 7 und 8 zeigen einen Ausschnitt des Spannfutters im Längsschnitt zusammen mit der schematisch dargestellten Druckluftquelle 26, dem Sensor 27 zum Erfassen der Luftströmung, einer Verbindungsleitung 28a sowie der elektronischen Steuer- und Auswertevorrichtung 29. Anhand dieser Figuren wird erläutert, wie ein korrektes Entriegeln der Spannelemente 5 überprüft werden kann. Um die Spannelemente 5 zu entriegeln, wird Druckluft in den Druckraum 24 eingeleitet. Dadurch wird der Kolben 3 entgegen der Kraft der Druckfedern nach oben gedrückt. Beim Hochfahren des Kolbens 3 werden auch die Verriegelungsbolzen 10 sowie die Öffnungsbolzen 17 nach oben bewegt. Dabei entfernt sich die schräge Druckfläche der Verriegelungsbolzen 10 von der Rückseite des jeweiligen Spannelements 5, so dass dieses durch den jeweiligen Öffnungsbolzen 17 radial nach aussen geschoben werden kann. Solange die Verriegelungsbolzen 10 nicht in der oberen Endstellung angelangt sind, kann eine geringe Menge der in den Druckraum 24 eingeleiteten Druckluft über die Durchgangsbohrung 14 der Schraube 13 sowie die Durchgangsbohrung 12 des Verriegelungsbolzens 10 in die Druckkammer 25 und von da über ein nicht dargestelltes Ventils nach aussen entweichen, was mittels des Sensors 27 wiederum erkennbar ist. Wie in der Fig. 7 durch Pfeile angedeutet, kann die Luft über die Durchgangsbohrungen 12, 14 und das geöffnete Rückschlagventil 15 nach oben aus dem Verriegelungsbolzen 10 austreten und über einen Ringspalt zwischen dem Verriegelungsbolzen 10 und dem Gehäuseoberteil 20 entweichen. Sobald jedoch der Kolben 3 in seine obere Endstellung gefahren ist, legt sich die stirnseitige Dichtung 16 des Verriegelungsbolzens 10 an dem Gehäuseoberteil 20 an und dichtet die Durchgangsbohrung 12 des Verriegelungsbolzens 10 nach oben hin ab. Damit wird das Entweichen der Luft und damit der Durchfluss der Luft durch den Sensor 27 gestoppt, was mittels des Sensors und der elektronischen Steuer- und Auswertevorrichtung 29 leicht erkennbar ist. Die Fig. 8 zeigt den sich in seiner oberen Endstellung befindlichen Verriegelungsbolzen 10. Da beim Hochfahren des Kolbens 3 die Spannelements 5 durch den jeweiligen Öffnungsbolzen 17 zwangsweise radial nach aussen geschoben werden, kann über das Messen der Luftströmung in der Verbindungsleitung 28a zuverlässig erkannt werden, ob sämtliche Spannelemente 5 korrekt entriegelt sind.

Somit kann jeweils über einen entfernt vom Spannfutter angeordneten Durchflusssensor die Funktion des Verriegelungsmechanismus bzw. der Spannelemente überwacht werden. Anstelle der beschriebenen, elektronischen Steuer und Auswertevorrichtung 29 kann beispielsweise auch eine elektrische, elektromechanische oder mechanische Steuer- und Auswertevorrichtung zum Einsatz kommen.

Um den oberen Kanal 22 bzw. unteren Kanal 23 des Spannfutters (Fig. 3) über die jeweilige Verbindungsleitung 28 (Fig. 5) bzw. 28a (Fig. 7) mit der Druckluftquelle 26 zu verbinden, ist eine nicht näher dargestellte Ventilanordnung vorgesehen. Obwohl in den Zeichnungen nur eine Druckluftquelle 26 dargestellt ist, können durchaus zwei separate Druckluftquellen vorgesehen werden, wobei in diesem Fall die eine Druckluftquelle 26 zur Speisung des oberen Kanals 22 und die andere zur Speisung des unteren Kanals 23 vorgesehen ist.

Sofern zwei separate Druckluftquellen vorgesehen sind, dürfte es Sinn machen, auch zwei Durchflussensoren je einen pro Druckluftquelle- vorzusehen. Ggf. kann natürlich auch nur ein Durchflusssensor vorgesehen werden.

Obwohl im vorliegenden Beispiel jeweils sämtliche Spannelemente mit einer Durchgangsbohrung versehen sind, kann es, je nach Anwendung, durchaus genügen, nur eines der Spannelemente mit einer Durchgangsbohrung zu versehen. Um sicherzustellen, dass sämtliche Spannelemente korrekt entriegelt wurden, sind vorzugsweise sämtliche Betätigungselemente in der Form von Verriegelungsbolzen mit einer Durchgangsbohrung versehen, wobei es auch hier, je nach Anwendung, durchaus genügen kann, nur einen der Verriegelungsbolzen mit einer Durchgangsbohrung zu versehen. Natürlich sind auch Zwischenvarianten möglich, indem jeweils einige der Spannelemente bzw. einige der Betätigungslemente mit einer Durchgangsbohrung versehen werden.

Gegebenenfalls kann die Spannfläche, an welcher die Spannelemente des Spannfutters angreifen, auch direkt am Werkstückträger angeformt sein. In diesem Fall kann auf einen Spannzapfen verzichtet werden.

Jedenfalls kann durch Messen der Luftströmung in der Verbindungsleitung zuverlässig erkannt werden, ob die Spannelemente des Spannfutters korrekt verriegelt bzw. entriegelt sind. Es versteht sich, dass die Luftströmung auch bei korrekt verriegelten bzw. entriegelten Spannelementen nicht absolut Null sein muss, sondern dass ein Grenzwert bestimmt werden kann, unterhalb dessen auf korrektes verriegeln bzw. entriegeln erkannt wird. Im Vergleich zu konventionellen, kugelförmig ausgebildeten Spannelementen besteht ein Vorteil der gezeigten, schieberförmig ausgebildeten Spannelemente darin, dass diese hohe Kräfte aufnehmen können, da sie mit einer vergleichsweise grossen Fläche am Spannzapfen zur Anlage kommen.

Neben den bereits erwähnten Vorzügen besteht ein weiterer Vorteil der erfindungsgemäss ausgebildeten Spanneinrichtung darin, dass am Spannfutter selber keine Sensoren angebracht werden müssen, sondern dass lediglich zwei Luftzufuhrkanäle als Schnittstelle zwischen dem Spannfutter und weiteren Elementen der Spanneinrichtung vorgesehen werden müssen. Somit brauchen natürlich auch keine elektrischen Verbindungsleitungen zwischen dem Spannfutter und dessen Peripherie vorgesehen zu werden. Mit der beschriebenen Variante einer Spanneinrichtung, deren Spannfutter lediglich über zwei, unter anderem als Schnittstelle dienende, Luftzufuhrkanäle sowie zumindest einen ausserhalb des Spannfutters angeordneten Durchflusssensor verfügt, können wesentliche Funktionen des Spannfutters überwacht und letzteres auch betätigt werden. Die beschriebene Lösung erlaubt, mit nur zwei Luftzufuhrkanälen
- das Spannfutter pneumatisch zu entriegeln,
- das Spannfutter pneumatisch nachzuspannen,
- das korrekte Entriegeln zu überwachen,
- das korrekte Verriegeln zu überwachen, sowie
- das Vorhandensein bzw. Fehlen einer Palette zu erkennen.

## Patentansprüche

1. Spanneinrichtung mit einem mit einem Verriegelungsmechanismus (2) versehenen Spannfutter (1) zum lösbaren Fixieren eines Werkstückträgers (33), wobei der Verriegelungsmechanismus (2) eine Vielzahl von Spannelementen (5) aufweist, welche in der Verriegelungsstellung an einer am Werkstückträger (33) oder einem mit diesem verbundenen Spannzapfen (30) angeordneten Spannfläche (31) anzugreifen bestimmt sind, um den Werkstückträger (33) am Spannfutter (1) zu fixieren, **dadurch gekennzeichnet, dass** zumindest ein Spannelement (5) mit einer Durchgangsbohrung (8, 8a) versehen ist, welche bei korrekter Verriegelung und/oder Entriegelung des jeweiligen Spannelements (5) einseitig verschlossen ist, und/oder dass zumindest einem Spannelement (5) ein mit einer Durchgangsbohrung (12) versehenes Betätigungselement (10) zugeordnet ist, dessen Durchgangsbohrung (12) bei korrekter Verriegelung und/oder Entriegelung des zugehörigen Spannelements (5) einseitig verschlossen ist, wobei die jeweilige Durchgangsbohrung (8, 8a, 12) über eine Verbindungsleitung (28, 28a) mit einer pneumatischen Quelle (26) verbindbar ist und zumindest ein Sensor (27) zum Erfassen der Luftströmung in der Verbindungsleitung (28, 28a) vorgesehen ist.

2. Spanneinrichtung nach Anspruch 1, **dadurch gekennzeichnet, dass** mehrere Spannelemente (5) mit einer einseitig verschliessbaren Durchgangsbohrung (8, 8a) versehen sind, insbesondere dass sämtliche Spannelemente (5) mit einer einseitig verschliessbaren Durchgangsbohrung (8, 8a) versehen sind.

3. Spanneinrichtung nach Anspruch 1 oder 2, **dadurch gekennzeichnet, dass** mehreren Spannelementen (5) ein mit einer Durchgangsbohrung (12) versehenes Betätigungselement (10) zugeordnet ist, insbesondere dass jedem Spannelement (5) ein mit einer Durchgangsbohrung (12) versehenes Betätigungselement (10) zugeordnet ist.

4. Spanneinrichtung nach einem der vorhergehenden Ansprüche, **dadurch gekennzeichnet, dass** die Spannelemente (5) schieberförmig ausgebildet sind und einen Kopfteil (6) aufweisen, der zur flächigen Anlage an der Spannfläche des Werkstückträgers (33) oder des Spannzapfens (30) ausgebildet ist.

5. Spanneinrichtung nach Anspruch 4, **dadurch gekennzeichnet, dass** das jeweilige Schieberelement (5) mit einer aus dem Kopfteil (6) mündenden Durchgangsbohrung (8a) versehen ist, welche bei korrekter Verriegelung des jeweiligen Spannelements (5) durch die Spannfläche des Werkstückträgers (33) oder des Spannzapfens (30) verschliessbar ist.

6. Spanneinrichtung nach einem der vorhergehenden Ansprüche, **dadurch gekennzeichnet, dass** jedem Spannelement (5) ein mit einer Durchgangsbohrung (12) versehenes Betätigungselement in der Form eines Bolzens (10) zugeordnet ist, wobei die Durchgangsbohrung (12) in der verriegelten Stellung des zugehörigen Spannelements (5) geöffnet ist, während die Durchgangsbohrung (12) in der korrekt entriegelten Stellung des zugehörigen Spannelements (5) verschlossen ist.

7. Spanneinrichtung nach einem der vorhergehenden Ansprüche, **dadurch gekennzeichnet, dass** der Verriegelungsmechanismus (2) zumindest einen Betätigungskolben (3) umfasst, mittels welchem die Spannelemente (5) in die Verriegelungsstellung und/oder in die Entriegelungsstellung verschiebbar sind.

8. Spanneinrichtung nach Anspruch 7, **dadurch gekennzeichnet, dass** der Verriegelungsmechanismus (2) pro Spannelement (5) einen mit dem Betätigungskolben (3) in Wirkverbindung stehenden Verriegelungsbolzen (10) aufweist, wobei zumindest ein Verriegelungsbolzen (10) mit einer Durchgangsbohrung (12) versehenen ist, und wobei die jeweilige Durchgangsbohrung (12) in der verriegelten Stellung des zugehörigen Spannelements (5) geöffnet und in der korrekt entriegelten Stellung des zugehörigen Spannelements (5) verschlossen ist.

9. Spanneinrichtung nach Anspruch 8, **dadurch gekennzeichnet, dass** der jeweilige Verriegelungsbolzen (10) eine schräge, dem zugehörigen Spannelement (5) zugewandte Druckfläche (11) aufweist, mittels welcher das zugehörige Spannelement (5) beim Verschieben des Kolbens (3) in seine Verriegelungsstellung verschiebbar ist.

10. Spanneinrichtung nach einem der vorhergehenden Ansprüche, **dadurch gekennzeichnet, dass** das Spannfutter (1) eine zentrale Öffnung (32) zur Aufnahme eines Spannzapfens (30) aufweist und die Spannelemente (5) quer zur Längsachse der Öffnung (32) verschiebbar sind.

11. Spanneinrichtung nach einem der vorhergehenden Ansprüche, **dadurch gekennzeichnet, dass** das Spannfutter (1) zumindest vier Spannelemente (5) aufweist.

12. Spanneinrichtung nach Anspruch 8, **dadurch gekennzeichnet, dass** das Spannfutter (1) einen Luftzufuhrkanal (23) aufweist, der über die Verbindungsleitung (28, 28a) mit der Druckquelle (26) sowie einem auf der Rückseite des Betätigungskolbens (3) angeordneten Druckraum (24) verbunden ist, wobei die Durchgangsbohrung (12) des jeweiligen Verriegelungsbolzens (10) mit dem genannten Druckraum (24) in Verbindung steht.

## Claims

1. Clamping device having a clamping chuck (1), provided with a locking mechanism (2), for releasably fixing a workpiece carrier (33), the locking mechanism (2) having a multiplicity of clamping elements (5) which, in the locking position, are intended to engage on a clamping surface (31) arranged on the workpiece carrier (33) or a clamping tenon (30) connected to the latter, in order to fix the workpiece carrier (33) on the clamping chuck (1), **characterized in that** at least one clamping element (5) is provided with a through-bore (8, 8a) which is closed on one side in the event of the correct locking and/or unlocking of the respective clamping element (5), and/or **in that** at least one clamping element (5) is assigned an actuating element (10) which is provided with a through-bore (12) and the through-bore (12) of which is closed on one side in the event of the correct locking and/or unlocking of the associated clamping element (5), the respective through-bore (8, 8a, 12) being connectable to a pneumatic source (26) via a connecting line (28, 28a), and at least one sensor (27) for detecting the air flow in the connecting line (28, 28a) being provided.

2. Clamping device according to Claim 1, **characterized in that** a plurality of clamping elements (5) are provided with a through-bore (8, 8a) closable on one side, in particular **in that** all the clamping elements (5) are provided with a through-bore (8, 8a) closable on one side.

3. Clamping device according to Claim 1 or 2, **characterized in that** a plurality of clamping elements (5) are assigned an actuating element (10) provided with a through-bore (12), in particular **in that** each clamping element (5) is assigned an actuating element (10) provided with a through-bore (12).

4. Clamping device according to one of the preceding claims, **characterized in that** the clamping elements (5) are of slide-shaped design and have a head part (6) which is designed to come to bear over its area against the clamping surface of the workpiece carrier (33) or of the clamping tenon (30).

5. Clamping device according to Claim 4, **characterized in that** the respective slide element (5) is provided with a through-bore (8a) which issues out of the head part (6) and which, in the event of the correct locking of the respective clamping element (5), is closable by means of the clamping surface of the workpiece carrier (33) or of the clamping tenon (30).

6. Clamping device according to one of the preceding claims, **characterized in that** each clamping element (5) is assigned an actuating element in the form of a bolt (10) and provided with a through-bore (12), the through-bore (12) being open in the locked position of the associated clamping element (5), while the through-bore (12) is closed in the correctly unlocked position of the associated clamping element (5).

7. Clamping device according to one of the preceding claims, **characterized in that** the locking mechanism (2) comprises at least one actuating piston (3), by means of which the clamping elements (5) are displaceable into the locking position and/or into the unlocking position.

8. Clamping device according to Claim 7, **characterized in that** the locking mechanism (2) has, per clamping element (5), one locking bolt (10) operatively connected to the actuating piston (3), at least one locking bolt (10) being provided with a through-bore (12), and the respective through-bore (12) being open in the locked position of the associated clamping element (5) and being closed in the correctly unlocked position of the associated clamping element (5).

9. Clamping device according to Claim 8, **characterized in that** the respective locking bolt (10) has an oblique pressure surface (11) which faces the associated clamping element (5) and by means of which the associated clamping element (5) is displaceable into its locking position during the displacement of the piston (3).

10. Clamping device according to one of the preceding claims, **characterized in that** the clamping chuck (1) has a central orifice (32) for the reception of a clamping tenon (30), and the clamping elements (5) are displaceable transversely with respect to the longitudinal axis of the orifice (32).

11. Clamping device according to one of the preceding claims, **characterized in that** the clamping chuck (1) has at least four clamping elements (5).

12. Clamping device according to Claim 8, **characterized in that** the clamping chuck (1) has an air supply duct (23) which is connected via the connecting line (28, 28a) to the pressure source (26) and to a pressure space (24) arranged on the rear side of the actuating piston (3), the through-bore (12) of the respective locking bolt (10) being connected to the said pressure space (24).

## Revendications

1. Dispositif de serrage doté d'un mandrin de serrage (1) pourvu d'un mécanisme de verrouillage (2), destiné à la fixation amovible d'un support de pièce à usiner (33), sachant que le mécanisme de verrouillage (2) présente un certain nombre d'éléments de serrage (5), lesquels en position verrouillée, sont destinés à s'accrocher à une surface de serrage (31) située sur le support de pièce à usiner (33) ou une cheville de serrage (30) relié à ce dernier, afin de fixer le support de pièce à usiner (33) au mandrin de serrage (1), **caractérisé en ce qu'**au moins un élément de serrage (5) est doté d'une perforation de passage (8, 8a), laquelle est obturée d'un côté lors d'un verrouillage et/ou déverrouillage correct de élément de serrage (5) correspondant, et/ou **en ce qu'**un élément d'actionnement (10) doté d'une perforation de passage (12) est affecté à au moins un élément de serrage (5), dont la perforation de passage (12) est obturée d'un côté lors d'un verrouillage et/ou déverrouillage correct de l'élément de serrage (5) correspondant, sachant que la perforation de passage (8, 8a, 12) peut être reliée à une source pneumatique (26) par le biais d'un circuit de connexion (28, 28a) et qu'elle est pourvue d'au moins une sonde (27) servant à identifier le flux d'air passant dans le circuit de connexion (28, 28a).

2. Dispositif de serrage selon la revendication 1, **caractérisé en ce que** plusieurs éléments de serrage (5) sont équipés d'une perforation de passage (8, 8a) pouvant être obturée d'un côté, en particulier **en ce que** tous les éléments de serrage (5) sont dotés d'une perforation de passage (8, 8a) pouvant être obturée d'un côté.

3. Dispositif de serrage selon la revendication 1 ou 2, **caractérisé en ce qu'**un élément d'actionnement (10) doté d'une perforation de passage (12) est affecté à plusieurs éléments de serrage (5), en particulier **en ce qu'**un élément d'actionnement (10) doté d'une perforation de passage (12) est affecté à chaque élément de serrage (5).

4. Dispositif de serrage selon l'une des revendications précédentes, **caractérisé en ce que** les éléments de serrage (5) sont conçus en forme de coulisseau et présentent une tête (6) conçue pour venir s'appliquer sur la surface de serrage du support de pièce à usiner (33) ou de la cheville de serrage (30).

5. Dispositif de serrage selon la revendication 4, **caractérisé en ce que** l'élément coulissant (5) correspondant est doté d'une perforation de passage (8a) sortant de la tête (6), laquelle peut être fermée lorsque l'élément de serrage (5) correspondant est correctement verrouillé par la surface de serrage du support de pièce à usiner (33) ou de la cheville de serrage (30).

6. Dispositif de serrage selon l'une des revendications précédentes, **caractérisé en ce qu'**un élément d'actionnement en forme de boulon (10) doté d'une perforation de passage (12) est affecté à chaque élément de serrage (5), sachant que la perforation de passage (12) est ouverte lorsque l'élément de serrage (5) afférent est en position verrouillée, cependant que la perforation de passage (12) est ouverte lorsque l'élément de serrage afférent (5) est dans la position correctement déverrouillée.

7. Dispositif de serrage selon l'une des revendications précédentes, **caractérisé en ce que** le mécanisme de verrouillage (2) englobe au moins un piston d'actionnement (3), à l'aide duquel les éléments de serrage (5) peuvent être mis en position verrouillée et/ou en position déverrouillée.

8. Dispositif de serrage selon la revendication 7, **caractérisé en ce que** le mécanisme de verrouillage (2) présente un boulon de verrouillage (10) agissant de concours avec le piston d'actionnement (3) pour chaque élément de serrage (5), sachant qu'au moins un boulon de verrouillage (10) est doté d'une perforation de passage (12) et sachant que la perforation de passage (12) correspondante est ouverte lorsque l'élément de serrage (5) afférent est en position verrouillée, et fermée lorsque l'élément de serrage (5) afférent est en position correctement déverrouillée.

9. Dispositif de serrage selon la revendication 8, **caractérisé en ce que** le boulon de verrouillage (10) correspondant présente une surface oblique orientée vers l'élément de serrage (5) afférent, à l'aide de laquelle élément de serrage (5) afférent peut être mis en position verrouillée lorsque le piston est poussé.

10. Dispositif de serrage selon l'une des revendications précédentes, **caractérisé en ce que** le mandrin de serrage (1) présente une ouverture centrale (32) destinée à recevoir une cheville de serrage (30) et **en ce que** les éléments de serrage (5) bougent à la transversale de l'axe longitudinal de l'ouverture (32).

11. Dispositif de serrage selon l'une des revendications précédentes, **caractérisé en ce que** le mandrin de serrage (1) présente au moins quatre éléments de serrage (5).

12. Dispositif de serrage selon la revendication 8, **caractérisé en ce que** le mandrin de serrage (1) présente un canal d'arrivée d'air (23) qui est relié à la source de pression (26) ainsi qu'à un compartiment sous pression situé au dos du piston d'actionnement (3) par le biais du circuit de connexion (28, 28a), sachant que la perforation de passage (12) de chaque boulon de verrouillage (10) est reliée au dit compartiment sous pression (24)
